# EUROPÄISCHE PATENTSCHRIFT

(11) **EP 0 710 938 B1**
(45) Veröffentlichungstag und Bekanntmachung des Hinweises auf die Patenterteilung: **21.05.2003**
(21) Anmeldenummer: 95810601.5
(22) Anmeldetag: 27.09.1995
(51) Int. Cl.: G07G 1/12, G07G 1/00, G07G 1/14, G07F 7/00

(54) **Protokolliersystem für die Abwicklung des Warenverkehrs eines Warenverkaufsbetriebs, insbesondere eines Einzelhändlers**
Registration system for the management of the circulation of goods in vending operations, in particular for retailers
Système d'enregistrement pour la gestion de la circulation des marchandises dans les opérations de vente d'articles, en particulier au détail

(30) Priorität: 02.11.1994 CH 326694
(43) Veröffentlichungstag der Anmeldung: 08.05.1996
(73) Patentinhaber: Cash + Carry Angehrn AG, CH-9202 Gossau SG (CH)
(72) Erfinder: Angehrn-Müller, Paul, CH-9032 Engelburg SG (CH)

(56) Entgegenhaltungen:
- EP-A- 0 196 192
- WO-A-93/03447
- US-A- 5 322 991
- US-A- 5 347 115

## Beschreibung

Die Erfindung betrifft ein Protokolliersystem für die Abwicklung des Warenverkehrs eines Warenverkaufsbetriebs, insbesondere eines Einzelhändlers, mit einer modular aufgebauten Registrierkasse, welche eine elektrisch steuerbare Geldkassette, eine Kassentastatur, eine optische Anzeige für den Kunden, einen Bon-Drucker für Kassenbons und Journalstreifen, einen optischen Handleser (Scanner) zum Einlesen von codierten Warendaten und einen die genannten Komponenten der Registrierkasse steuernden Rechner aufweist.

Kleinere und mittlere Einzelhändler, insbesondere in der Lebensmittelbranche, beziehen ihre Waren in der Regel bei Grossverteilern, in selteneren Fällen und auch dann nur teilweise auch direkt beim Produzenten. Eine typische Bezugsquelle für solche Einzelhändler sind Abholgrossmärkte, sog. Cash & Carry - Grossmärkte (CC). Dasselbe gilt vielfach auch für Restaurants, Hotels und ähnliche Betriebe.

Abholgrosshändler bieten ihren wiederverkaufenden Kunden vielfach Unterstützung bei der Organisation ihres Betriebs bzw. der Geschäftsabwicklung. Eine dieser verkaufsunterstützenden Hilfestellungen besteht unter anderem in der Vorgabe von Richt-Verkaufspreisen für die angebotenen Waren, wobei der Einzelhändler, sofern er nicht einer Kette oder ähnlichen Organisation angeschlossen ist, an diese Richt-Verkaufspreise aber nicht gebunden ist.

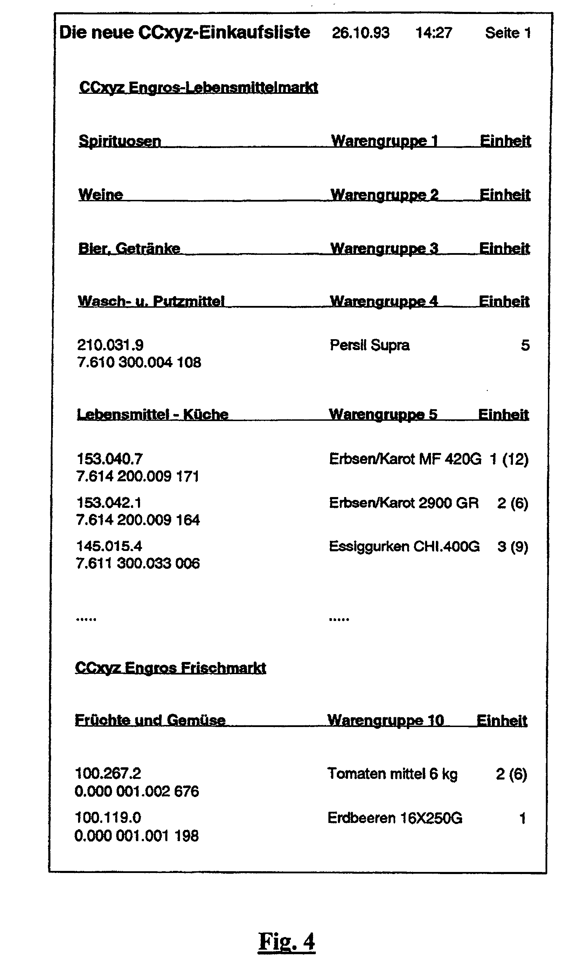

In Selbstbedienungsläden nicht nur des Einzelhandels ist es weit verbreitet, die zum Verkauf angebotenen Waren in Regalen anzuordnen, wobei der Trend dahin geht, nicht mehr jede einzelne Ware mit einem individuellen Preisschild zu versehen, sondern an den Regalen sogenannte Regalpreisschilder anzubringen, die natürlich in geeigneter räumlicher Zuordnung zu den feilgebotenen Waren angeordnet werden, so dass der Kunde den zur Ware gehörigen Verkaufspreis ohne Schwierigkeiten erkennen kann. Solche Regalpreisschilder werden in der Regel an horizontalen Stirnflächen der Regale befestigt und sind praktisch z.B. als selbstklebende Etiketten ausgebildet oder können in speziell für diesen Zweck erhältliche Schienen eingesteckt werden. Üblicherweise enthalten solche Regalpreisschilder eine Warenbezeichnung sowie Preis- und Mengenangaben in Klartext und einen maschinell lesbaren Code mit diversen Warenidentifikationsinformationen wie z.B. eine Artikelnummer und dgl.. Ein typisches Beispiel eines solchen Regalpreisschilds ist in Fig. 3 dargestellt. Bei Waren, die aus welchen Gründen auch immer nicht in Regalen angeordnet werden, wie z.B. Obst und Gemüse, werden meistens spezielle Träger für die Preisschilder verwendet. Im folgenden werden unter Regalpreisschildern auch auf solchen Trägern angeordnete Preisschilder verstanden.

Wenngleich die Verwendung von Regalpreisschildern gegenüber der Einzelauspreisung der Waren eine offensichtliche Arbeitseinsparung für den Einzelhändler bedeutet, ist bei den üblicherweise häufig wechselnden Wiederverkaufspreisen, insbesondere auch im Zusammenhang mit häufigen Sonderaktionen etc., der für die Anpassung der Regalpreisschilder erforderliche Aufwand immer noch beträchtlich. Es stehen dazu zwar schon spezielle computergesteuerte Druckgeräte zur Verfügung, mit denen sich solche Regalpreisschilder in ansprechender Qualität relativ einfach herstellen lassen, die Eingabe der entsprechenden Daten bzw. deren Änderungen zur Steuerung dieser Geräte ist jedoch nach wie vor ein mühsamer und arbeitsintensiver Prozess.

Eine weitere mühsame Routine-Tätigkeit, mit der sich der Einzelhändler regelmässig konfrontiert sieht, ist die Erstellung einer Einkaufsliste für die beim Abholgrosshändler zu beschaffenden Waren. Er muss dazu in der Regel eine genaue Aufstellung nach Warenbezeichnungen, Warennummern, Verpackungseinheiten, Bestellmengen und eventuellen anderen relevanten Kriterien anfertigen, was in vielen Fällen mit nicht unerheblichem Aufwand verbunden ist.

Die ältere Europäische Patentanmeldung Nr. EP-A-0 652 535 mit Priorität vom 08.10.1993 beschäftigt sich mit dieser Problematik und hat zum Ziel, dem Einzelhändler bei der Abwicklung der genannten, mehr oder weniger regelmässig anfallenden Arbeiten erleichternd zur Hand zu gehen. Im Konkreten wird dazu eine Vorrichtung zur Verfügung gestellt, welche die im Zusammenhang mit der Preisauszeichnung und der Erstellung von Einkaufslisten anfallenden Arbeiten weitestgehend zu automatisieren und auf ein Mindestmass zu reduzieren gestattet. Insbesondere wird eine Vorrichtung beschrieben, die eine rationelle und weitestgehend selbsttätige Erstellung von visuell lesbaren Datenträgern, wie sie z.B. Regalpreisschilder oder Einkaufslisten darstellen, ermöglicht.

Die in der genannten älteren Europäischen Patentanmeldung beschriebene Vorrichtung umfasst einen beim Abholgrosshändler befindlichen Hauptrechner mit einem zugeordnetem optischen Leser (Scanner) und einem zugeordneten Schilderdrucker sowie einen beim Einzelhändler befindlichen Handrechner mit einem zugeordneten optischen Handleser und einem zugeordneten Listendrucker. Die beiden Rechner sind über ein transportables Speichermedium in kommunikativer Verbindung.

Mittels des Handlesers können auf Waren oder ihrer Verpackung in codierter Form vorhandene Warendaten erfasst und in den Handrechner transferiert werden. Aufgrund der erfassten Daten und aufgrund von im Handrechner gespeicherten warensortimentspezifischen Warendaten kann automatisch eine Einkaufsliste für den Einzelhändler erstellt und über den Listendrucker ausgedruckt werden. Der Handrechner kann zudem zur Erstellung von Inventurlisten und in Verbindung mit einem Bon-Drucker zur Erstellung von Klartext-Verkaufsbons eingesetzt werden.

Der optische Hauptleser beim Abholgrosshändler erfasst vom Einzelhändler eingekaufte Waren. Der Hauptrechner erstellt aufgrund der erfassten Warendaten und aufgrund von in ihm gespeicherten warensortimentspezifischen Warendaten in Verbindung mit dem Schilderdrucker automatisch aktualisierte Regalpreisschilder für den Einzelhändler und aktualisiert auch automatisch dessen warensortimentspezifischen Datenbestand auf dem Speichermedium.

Die in der genannten älteren Europäischen Patentanmeldung beschriebene Vorrichtung besteht also aus einem speziellen Verbund von lokal getrennten Rechnern mit jeweils zugeordneten speziellen Peripheriegeräten, wobei die Rechner so programmiert sind, dass sie die genannten Funktionen ausführen und die Peripheriegeräte entsprechend ansteuern können. Die Vorrichtung erlaubt insbesondere eine rationellere und weniger arbeitsaufwendige Abwicklung der sich z.B. bei Sortiments- und Preisänderungen erforderlichen Anpassungsarbeiten für den Einzelhändler.

Die US-A-5 347 115 zeigt ein als Ganzes tragbar ausgebildetes Datenerfassungssystem (data collection apparatus), das im wesentlichen aus einem Drucker, einer mit dem Drucker körperlich fest verbundenen Andockstation und einem tragbaren Rechner (data collection terminal) mit angeschlossenem Scanner (Strich-Code Leser) besteht, wobei der tragbare Rechner über die Andockstation mit dem Drucker verbunden werden kann. Der tragbare Rechner dient, ggf. auch in Verbindung mit dem mit ihm mittragbaren Scanner, zur Erfassung von Daten, die in ihm gespeichert und nach Einführung in die Andockstation direkt oder in aufbereiteter Form auf dem Drucker ausgedruckt werden können. Ein beispielsweiser Anwendungsbereich für das Datenerfassungssystem ist die Erfassung von Warenbeständen etc. in einem Warenverkaufsbetrieb.

Die EP-A-0 196 192 zeigt eine für die Verarbeitung von Kreditkarten ausgebildete Registrierkasse, die in einem gemeinsamen Gehäuse einen Kartenleser, eine Tastatur, eine Anzeige, zwei Drucker, eine Geldlade und einen diese Teile steuernden Rechner (Prozessor) aufweist. Zusätzlich ist noch mindestens eine weitere, microprozessorgesteuerte Tastatur vorgesehen, die an die Registrierkasse körperlich und elektrisch ankoppelbar ist. Mittels dieser tragbaren Zusatztastatur können räumlich entfernt und unabhängig von der Registrierkasse sensitive Benutzerdaten eingegeben und vorübergehend in der Zusatztastatur gespeichert werden. Eine in der Zusatztastatur vorgesehene kleine Anzeige erlaubt die visuelle Überprüfung der Eingaben. Nach Anschluss der Zusatztastatur an die Registrierkasse werden die eingegebenen Benutzerdaten in geschützter Form in den Rechner der Registrierkasse übertragen und für die jeweilige Transaktion ausgewertet. Die Abwicklung von Kreditkarten-Transaktionen wird auf diese Weise vereinfacht.

Die vorbeschriebene Vorrichtung gemäss der älteren Europäischen Patentanmeldung Nr. EP-A-0 652 535 befasst sich im wesentlichen mit den Tätigkeiten ausserhalb des eigentlichen Verkaufsvorgangs und setzt für den letzteren immer noch das Vorhandensein einer üblichen Registrierkasse voraus. Die vorliegende Erfindung hat dagegen zum Ziel, den apparativen Aufwand für die Abwicklung der vorstehend beschriebenen Routine-Tätigkeiten eines Warenverkaufsbetriebs unter Einbeziehung der in der genannten älteren Europäischen Patentanmeldung beschriebenen Vorrichtung bzw. Vorgehensweisen wesentlich zu reduzieren und insbesondere ein besonders für den kleineren Einzelhändler geeignetes Protokolliersystem zu schaffen, mit welchem sich die meisten Routine-Tätigkeiten eines Warenverkaufsbetriebs unter geringstem apparativen Aufwand auf einfache und rationelle Weise abwickeln lassen.

Das dieser Zielsetzung gerecht werdende Protokolliersystem ist erfindungsgemäss dadurch gekennzeichnet, dass der Rechner als transportabler Handrechner ausgebildet und zusammen mit dem an ihn angeschlossenen Handleser aus dem Verbund der Registrierkasse entnehmbar und als transportable autonome Einheit einsetzbar ist, wobei der Handrechner zusätzlich zu den Funktionalitäten für die Steuerung der Registrierkasse mindestens noch eine Funktionalität zum Erfassen von Warenbeständen und/oder Warennachbeschaffungen aufweist, wobei über den Handleser Warendaten auf Regalpreisschildern oder anderen Warendatenträgern in den Handrechner eingelesen und zur Erstellung von Inventurdaten bzw. Warennachbeschaffungsdaten weiter verarbeitet werden.

Das erfindungsgemasse Protokolliersystem ist also gewissermassen die konsequente Weiterentwicklung der Vorrichtung gemäss der genannten älteren Europäischen Patentanmeldung. Modular aufgebaute Registrierkassen gehören an sich selbstverständlich schon zum Stand der Technik. Die bekannten modularen Registrierkassen sind jedoch üblicherweise nicht mit einem Handrechner ausgestattet und weisen keine zusätzlichen Funktionalitäten auf, welche über diejenigen modernerer Registrierkassen hinausgehen. Andererseits hat die in der älteren Europäischen Patentanmeldung beschriebene Vorrichtung nicht die volle Funktionalität einer Registrierkasse, so dass immer noch eine separate Registrierkasse erforderlich ist. Die vorliegende Erfindung vereint nun die Vorteile der aus der genannten Europäischen Patentanmeldung bekannten Vorrichtung und des modularen Aufbaus von Registrierkassen und schafft so ein insgesamt leistungsfähigeres und gleichzeitig weniger aurwendiges und daher besonders für den in der Regel bezüglich seiner Resourcen grösseren Einschränkungen unterworfenen Einzelhändler geeignetes System, das jedoch selbstverständlich auch für grössere Warenverteiler sowie Hotels, Restaurants und ähnliche Betriebe von Vorteil ist.

Einzelheiten und weitere Vorteile der Erfindung werden nachstehend anhand eines Ausführungsbeispiels des erfindungsgemässen Systems in Verbindung mit der Zeichnung näher erläutert. In der Zeichnung zeigen:
- Fig. 1: ein Blockdiagramm eines erfindungsgemässen Protokolliersystems,
- Fig. 2: eine schematische Darstellung der Einbindung des Systems der Figur 1 in ein Gesamtsystem zur Abwicklung des Warenverkehrs zwischen Konsument, Einzelhändler und Grossverteiler,
- Fig. 3: ein Beispiel eines typischenen Regalpreisschilds und
- Fig. 4: ein Beipiel einer typischen Einkaufsliste.

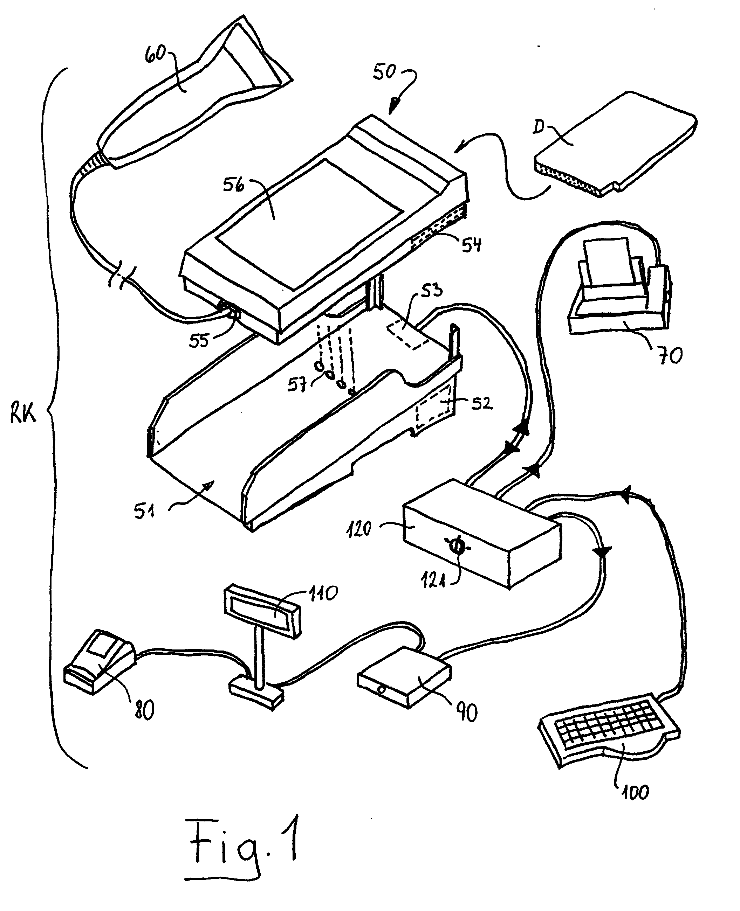

Das in Figur 1 gezeigte Protokolliersystem umfasst im wesentlichen eine modular aufgebaute Registrierkasse RK und zusätzlich einen Listendrucker 70. Die Registrierkasse RK umfasst ihrerseits die typischen Komponenten einer Registrierkasse, nämlich eine elektrisch ansteuerbare Geldkassette 90, eine Kassentastatur 100, eine Anzeigeeinrichtung 110 für die Kunden, einen Bon-Drucker 80 für Kassenbons und Journalstreifen, einen optischen Handleser (Laser-Balken-Code-Scanner) 60 und einen Rechner 50, der die einzelnen Komponenten der Registrierkasse RK und den Listendrucker 70 steuert. Der Listendrucker und die einzelnen Komponenten der Registrierkasse sind direkt oder über eine Verteileinheit 120 an den Rechner 50 angeschlossen.

Mit Ausnahme der Verteileinheit 120 sind sämtliche Komponenten der Registrierkasse RK und der Listendrucker 70 marktübliche Standard-Funktionseinheiten, die für sich keiner näheren Erläuterung bedürfen. Der Rechner 50 ist als transportabler Handrechner ausgebildet, beispielsweise ist dazu der Typ EHT-30 der Firma Seiko Epson Corporation bestens geeignet. Bei der Anzeigeeinrichtung handelt es sich z.B. um ein Daten-Display des Typs DM D101 von Seiko Epson Corporation. Der Bon-Drucker 80 ist ein üblicher Rollen-Drucker, wie er zum Ausdruck von Kassen-Bons üblicherweise eingesetzt wird, beispielsweise ein Label-Printer der Serie TM 300 derselben Firma. Der Hand-Leser 60 ist ein Standard-Laser-Scanner, wie er insbesondere auch in Verkaufsläden zum Ablesen von üblicherweise in speziellen Code-Feldern auf Waren oder deren Verpackung angebrachten codierten Wareninformationsdaten eingesetzt wird. Der Listendrucker 70 ist ein Standard-Drucker für A4-Blätter oder Endlospapier. Alle diese Komponenten sind in verschiedenen Ausführungen standardmässig z.B. bei der Firma Seiko Epson Corporation erhältlich. Zusätzlich oder alternativ zum Handleser kann auch ein ebenfalls an sich bekannter stationärer Scanner vorgesehen sein.

Der Handrechner 50 ist mit einer Basisstation 51 versehen, in der eine Ladeeinrichtung 52 für den im Handrechner befindlichen Akkumulator sowie eine bidirektionale serielle Schnittstelle 53 untergebracht ist. Der Handrechner 50 verfügt über eine serielle Schnittstelle 55 zum direkten Anschluss des Handlesers 60 sowie eine Infrarot-Kommunikationsverbindung 57 mit der bidirektionalen Schnittstelle 53 in der Basisstation 51. Ferner ist der Handrechner 50 mit einem Schreib/Lesegerät 54 für ein nicht-flüchtiges transportables Speichermedium D ausgestattet. Vorzugsweise handelt es sich bei diesem Speichermedium D um eine Speicherkarte, die aus elektrisch lesund beschreibbaren Speicherbausteinen aufgebaut ist. Solche Speicherkarten, die unter der Bezeichnung PCMCIA-Karten bekannt sind, besitzen eine höhere Speicherkapazität (2 MByte) als die üblichen magnetische Disketten und weisen gegenüber diesen vor allem den Vorteil auf, dass sie keine beweglichen Teile enthalten. Es versteht sich, dass das Schreib/Lesegerät 54 auf die Art des Speichermediums D abgestimmt sein muss. Zur Bedienung des Handrechners 50 ist dieser mit einem berührungsaktiven Bildschirm (Touch-Screen) 56 versehen, sodass eine eigene Bedienungs-Tastatur entfällt. Darüber hinaus enthält der Handrechner 50 eine Zentraleinheit (CPU) des Typs 8086 und die üblichen Komponenten eines Rechnersystems, wie z.B. Festwertund Arbeitsspeicher, Steuerlogiken, Treibereinheiten, DOS-Betriebssystem und ein Bussystem. Näheres zum Aufbau und zur Programmierung des Rechners findet sich z.B. in den einschlägigen Datenblättern der Firma Seiko Epson Corporation. Analoges gilt auch für die übrigen Komponenten der Registrierkasse RK und den Listendrucker 70.

Der Handleser 60 ist über die serielle Schnittstelle 55 direkt mit dem Handrechner 50 verbunden. Die Kommunikation des Handrechners 50 mit den übrigen Komponenten erfolgt über die Infrarot-Verbindung und die bidirektionale Schnittstelle 53, an welche die Verteileinheit 120 angeschlossen ist. An diese sind direkt drei Komponenten angeschlossen, und zwar der Listendrucker 70, die Kassentastatur 100 und die Geldkassette 90. Von der Geldkassette 90 führt eine Verbindung zur Anzeigeeinrichtung 110 und von dieser weiter zum Bon-Drucker 80.

An der Verteileinheit 120 ist ein Wahlschalter 121 vorgesehen, mittels welchem manuell eine Verbindung gewählt werden kann zwischen der bidirektionalen Schnittstelle 53 und entweder nur dem Listendrucker 70 oder den übrigen Komponenten (Tastatur 100, Geldkassette 90, Anzeigeeinrichtung 110 und Bon-Drucker 80). In der Verteileinheit 120 befindet sich eine Steuerlogik, welche auf vom Handrechner 50 kommende Steuerbefehle (z.B. in Form von speziellen Steuerzeichen) reagiert und entsprechende Steuerbefehle für die Geldkassette 90 und die Anzeigeeinrichtung 110 erzeugt.

Zum Öffnen der Schublade der Geldkassette wird z.B. vom Handrechner 50 ein nicht darstellbares Zeichen gesendet, welches von der Steuerlogik in der Verteileinheit 120 erkannt wird und in ein Signal umgesetzt wird, welches die elektrische Auslösung der Schublade bewirkt. Das nicht darstellbare Zeichen gelangt zwar auch an die Anzeigeeinrichtung 110 und den Bon-Drucker 80, diese reagieren darauf jedoch nicht, weil es sich um kein darstellbares Zeichen handelt. Die Anzeigeeinrichtung 110 verfügt über eine elektrisch steuerbare Durchschleifsperre für die an ihr anliegenden Signale. Wenn also ein Zeichen lediglich angezeigt und nicht auch gedruckt werden soll, so sendet der Handrechner 50 vor dem betreffenden Zeichen ein Steuerzeichen (z.B. in Form einer sogenannten Escape-Sequenz). Dieses Steuerzeichen wird von der Steuerlogik in der Verteileinheit 120 erkannt und in einen Steuerbefehl für die Durchschleifsperre in der Anzeigeeinrichtung 110 umgesetzt, so dass das nachfolgende Zeichen nur auf der Anzeige erscheint, nicht aber zum Bon-Drucker gelangt.

Die Verteileinheit 120 teilt femer den bidirektionalen Kommunikationskanal in einen (vom Handrechner aus gesehen) ausgehenden und einen eingehenden Teilkanal auf. Am ausgehenden Teilkanal sind die Geldkassette 90, die Anzeigeeinrichtung 110 und der Bon-Drucker 80 angeschlossen, am eingehenden Teilkanal die Kassentastatur 100. Die Tastatur 100 ist eine handelsübliche Standard-Kassentastatur und arbeitet als solche synchron und mit einer standardisierten Übertragungsgeschwindigkeit, welche hier aus bestimmten Gründen von der Übertragungsgeschwindigkeit der bidirektionalen Schnittstelle 53 abweicht, welche ausserdem asynchron arbeitet. Deshalb ist in der Verteileinheit 120 zusätzlich noch eine Wandler-Schaltung eingebaut, welche eine Synchron-Asynchron-Wandlung der von der Kassentastatur kommenden Signale und eine Anpassung der Übertragungsgeschwindigkeit vornimmt. Solche Wandler-Schaltungen sind an sich bekannt und bedürfen keiner näheren Erläuterung.

Der Handrechner 50 hat eine doppelte Funktion: Wenn er sich auf der Basisstation befindet, steht er über elektrische Kontakte und die Infrarot-Verbindung mit dem übrigen System in Verbindung und steuert dann in noch zu beschreibender Weise das letztere. Gleichzeitig wird dabei sein Akkumulator von der Ladeeinrichtung aufgeladen. Andererseits bildet der Handrechner 50 zusammen mit dem an ihn über die serielle Schnittstelle 55 angeschlossenen Handleser 60 eine aus dem Verbund mit der Registrierkasse RK lösbare (und wieder in diese einsetzbare) transportable autonome Einheit, die für die weiter unten noch näher erläuterten Arbeitsabläufe eingesetzt werden kann.

Der Handrechner 50 ist also die alles steuernde Zentraleinheit des gesamten Systems. Das Betriebssystem (DOS) ist fest in ihm gespeichert, die eigentlichen Anwenderfunktionen zur Steuerung der diversen Funktionsabläufe liegen als veränderbarer Programmcode vor. Der Programmcode selbst kann in einem internen Speicher des Handrechners abgelegt oder auch auf dem Speichermedium D enthalten sein. Dasselbe gilt auch für den Datenbestand (z.B. Warendaten), auf den der Rechner bei der Ausführung der diversen Funktionsabläufe zugreift. Der Programmcode wird dem Rechner über das Speichermedium D zugeführt. Der Handrechner enthält eine Programm-Routine, welche eine Aktualisierung des Programmcodes und ggf. des Datenbestands über das Speichermedium D ermöglicht. Die Erstellung des Programmcodes für die Implementierung der diversen Anwenderfunktionen (Funktionalitäten) des Handrechners erfolgt auf konventionelle Weise und ist nicht Gegenstand der vorliegenden Erfindung. Es sei daher lediglich auf die einschlägigen Handbücher und Anweisungen der Herstellerfirma des Handrechners sowie auf die allgemeine Literatur zur Programmierung von DOS-Rechnern verwiesen.

Im Handrechner 50 sind z.B. die folgenden Anwendungs-Funktionalitäten in Form entsprechender Programme implementiert:
- Standard-Kassenfunktion
- Administration der Kasse (Tagesabschluss)
- Preisänderungen (z.B. bei Aktionen)
- Einkaufslisten-Aufnahme
- Einkaufslisten-Druck
- Inventur-Aufnahme
- Inventurlisten-Druck
- Diverse Hilfsprogramme wie z.B. Einlesen des Speichermediums

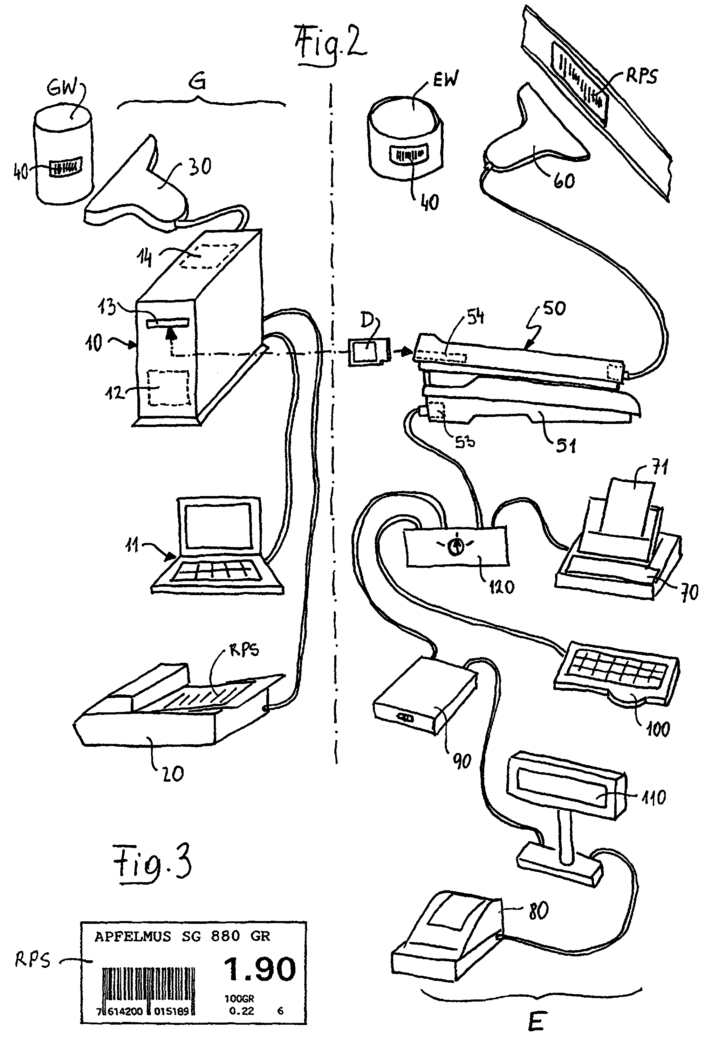

Die einzelnen Funktionalitäten werden in Form eines Auswahlmenüs auf dem Bildschirm des Handrechners angezeigt und können durch Berührung ausgewählt und gestartet werden. Es versteht sich, dass die Erzeugung des Auswahlmenüs etc. selbst auch wieder ein eigenes Programm ist. Einige der angeführten Anwendungs-Funktionalitäten werden weiter unten noch näher erklärt. Zunächst sei jedoch anhand der Figur 2 erläutert, wie das beschriebene erfindungsgemässe Protokolliersystem in die in der genannten älteren Europäischen Patentanmeldung beschriebene Vorrichtung eingefügt werden kann.

Die in der Fig. 2 gezeigte Vorrichtung umfasst darstellungsgemäss zwei lokal getrennte Geräte-Komplexe, von denen sich der in der Zeichnung linke Komplex G beim Abholgrosshändler (Cash & Carry - Abholgrossmarkt) und der in der Zeichnung rechte Komplex E beim Einzelhändler befindet. Die beiden Geräte-Komplexe sind durch das schon erwähnte, mit beiden zusammenwirkende, transportable nichtflüchtige Speichermedium D in Form einer PCMCIA-Karte in Kommunikationsverbindung. Der in der Zeichnung rechte Geräte-Komplex E ist identisch mit dem in Figur 1 gezeigten erfindungsgemässen Protokolliersystem und ist entsprechend der Anzahl der die Vorrichtung benutzenden Einzelhändler mehrfach vorhanden, während der in der Zeichnung linke Komplex selbstverständlich nur in einfacher Ausführung vorhanden zu sein braucht.

Der beim Abholgrosshändler installierte Geräte-Komplex G umfasst im wesentlichen einen Hauptrechner 10, einen an diesen angeschlossenen Schilderdrucker 20 und einen ebenfalls mit dem Hauptrechner zusammengeschlossenen optischen Haupt-Leser (Haupt-Scanner) 30. Der Hauptrechner 10 selbst umfasst im wesentlichen eine Eingabe/Ausgabe-Konsole 11, einen Hauptspeicher 12, ein Schreib/Lesegerät 13 für das genannte transportable Speichermedium D, einen Programmspeicher 14 und eine Reihe weiterer, für die Funktionsfähigkeit des Rechners als solchem erforderlicher konventioneller Komponenten und Einheiten, die jedoch für das Verständnis des Erfindungsgegenstands nicht von Bedeutung und deshalb hier nicht näher erläutert sind.

Der Hauptrechner 10, der Schilderdrucker 20, der optische Haupt-Leser 30, der Hauptspeicher 12, die Ein/Ausgabe-Konsole 11, das Schreib/Lesegerät 13 und der Programmspeicher 14 sowie die übrigen Komponenten und Einheiten des Hauptrechners 10 sind in an sich bekannter Weise zu einem funktionsfähigen Ganzen zusammengeschaltet. Die Zusammenschaltung dieser Komponenten, Einheiten und Peripheriegeräte an sich ist dem Computerfachmann geläufig und bedarf deshalb hier keiner weiteren Erläuterung.

Der Programmspeicher 14 enthält in an sich bekannter Weise das Programm, welches das Zusammenwirken der einzelnen Komponenten und Peripheriegeräte gemäss dem weiter unten noch im Detail erläuterten, erfindungsgemässen Funktionsschema steuert bzw. bewirkt. Die Programmierung des Hauptrechners selbst erfolgt in an sich üblicher Art und Weise und ist nicht Gegenstand der vorliegenden Erfindung.

Der Hauptspeicher 12 enthält die für das Warensortiment des Abholgrosshändlers spezifischen Warendaten. Dazu gehören neben Warenbezeichnungen, Artikelnummern, Verpackungseinheiten, Warenklassen- bzw. -gruppen und primär nur für den Abholgrosshändler selbst relevanten Daten insbesondere auch Richtverkaufspreise für den Einzelhändler. Diese Warendaten sind dem Hauptrechner 10 zugänglich und können von diesem in noch zu beschreibender Weise verwertet werden. Die Warendaten werden vom Abholgrosshändler in üblicher Weise regelmässig gepflegt, wobei dieser Vorgang nicht Gegenstand der vorliegenden Erfindung ist.

Das Schreib/Lesegerät 13 erlaubt, programmgesteuert auf dem Speichermedium D enthaltene Informationen in den Hauptrechner 10 einzulesen und umgekehrt Daten vom Hauptrechner auf das Speichermedium zu schreiben. Beim Speichermedium D handelt es sich beispielsweise um eine übliche magnetische Diskette oder, wie schon erwähnt, vorzugsweise um eine Speicherkarte, die aus elektrisch les- und beschreibbaren Speicherbausteinen aufgebaut ist (PCMCIA-Karte).

Die Ein/Ausgabe-Konsole 11 ist eine standardmässige Bedienungsschnittstelle zur Eingabe von Daten und Steuerbefehlen und zur Anzeige von Ergebnissen, Daten und Informationen durch bzw. für die Bedienungsperson.

Der optische Haupt-Leser (Haupt-Scanner) 30 ist konventioneller Bauart und gestattet das Einlesen von in maschinenlesbarer Form (üblicherweise in Form eines genormten Balken-Codes, z.B. eines sog. EAN-Codes) in einem Code-Feld 40 auf Waren GW oder deren Verpackung angebrachten Warendaten in den Hauptrechner. Scanner dieser Art und ihr Einsatz in Verkaufsläden sind an sich bekannt und bedürfen deshalb keiner weiteren Erläuterung.

Der Schilderdrucker 20 ist ein konventioneller Drucker üblicher Bauart, der zum Bedrucken von z.B. selbstklebenden Etiketten oder dünnen Karton-Etiketten geeignet ist. Der Schilderdrucker 20 dient hier in an sich bereits bekannter Weise zum Ausdrucken von Regalpreisschildern RPS aufgrund von im Hauptrechner 10 bzw. in dessen Hauptspeicher 12 enthaltenen Warendaten. Der Schilderdrucker 20 druckt dabei auf einen vorperforierten A4-Bogen mehrere Regalpreisschilder RPS, welche dann einfach manuell abgetrennt werden können. Die Erstellung solcher Regalpreisschilder RPS ist, wie schon erwähnt, an sich bekannt und bedarf deshalb keiner näheren Erläuterung.

Im folgenden werden die Funktionsweise und die Bedienung der beschriebenen Vorrichtung im einzelnen erläutert. Dabei wird davon ausgegangen, dass im Handrechner 50 des Einzelhändlers bzw. im Speicher des Handrechners 50 sowie im Hauptrechner 10 des Abholgrosshändlers bzw. im Hauptspeicher 12 des Hauptrechners 10 die schon genannten warensortimentspezifischen Warendaten in gespeicherter Form vorliegen. Da die Sortimente von Abholgrosshändler und Einzelhändler in der Regel unterschiedlich umfangreich sind (der Einzelhändler führt nur in Ausnahmefällen das gesamte Warensortiment des Abholgrosshändlers), ist der Datenbestand beim Einzelhändler entsprechend weniger umfangreich als beim Abholgrosshändler.

Der Handrechner 50 ist, wie schon erwähnt, für verschiedene Funktionen programmiert. Dazu gehören primär der Standard-Kassenvorgang, der Kassentagesabschluss, die Aufnahme der Einkaufsliste, der Ausdruck der Einkaufsliste, die Inventur-Aufnahme, der Ausdruck einer Inventur-Liste und das Einlesen des transportablen Speichermediums. Für andere Anwender, z.B. Hotels oder Restaurants, können an deren spezielle Bedürfnisse angepasste andere Funktianen vorgesehen sein.

Für den Kassenvorgang und den Kassentagesabschluss arbeitet der Handrechner 50 mit dem Handleser 60, der Kassentastatur 100, der Anzeigeeinrichtung 110 und dem Bon-Drucker 80 zusammen. An der Verkaufskasse werden von allen an einen Kunden (Wiederverkäufer oder Konsument) verkauften Waren EW, die mit einem Code-Feld 40 versehen sind, mit dem Handleser 60 die Waren-Codes abgelesen und in den Handrechner 50 transferiert. Die Warendaten von Waren, die nicht mit Code-Feldern versehen sind, weil sie z.B. von einem anderen Grossisten oder Lieferanten stammen, werden manuell über die Kassentastatur eingegeben. Der Handrechner 50 veranlasst dann aufgrund der so eingelesenen bzw. manuell eingegebenen Warendaten und der in ihm gespeicherten warensortimentspezifischen Warendaten eine entsprechende Anzeige der Warendaten auf der Anzeigeeinrichtung 110 und über den Bon-Drucker 80 den Ausdruck eines Klartext-Verkaufsbons 81 für den Kunden. Gleichzeitig werden die Daten der verkauften Waren EW für den Tagesabschluss gespeichert. Mit der Funktion Tagesabschluss wird automatisch ein Protokoll aller mit dem Handleser und manuell über die Tastatur erfassten Waren über den Bon-Drucker sortiert nach Warengruppen ausgedruckt. Die Klassifikation der Waren in einzelne Warengruppen ist natürlich ebenfalls im Handrechner und im Hauptrechner gespeichert.

Für die Inventur-Funktionen arbeitet der Handrechner 50 einerseits als autonome Einheit mit dem Handleser 60 und anderseits im Verbund mit dem übrigen System mit dem Listendrucker 70 zusammen. Der Einzelhändler liest dabei mittels des Handlesers die Waren-Codes der in den Regalen vorhandenen Waren von den Regalpreisschildern RPS ab und gibt die Warenmengen von Hand (über dessen berührungsaktiven Bildschirm) in den Handrechner ein. Dieser erstellt dann anhand der eingelesenen und eingegebenen Daten und der gespeicherten Warendaten eine z.B. nach Warengruppen geordnete Inventur-Liste und druckt diese, wenn er sich wieder im Verbund mit dem übrigen System befindet, über den Listendrucker aus.

Eine der wichtigsten Funktionen der Vorrichtung ist die semi-automatische Erstellung einer Einkaufsliste für den Einzelhändler. Dazu arbeitet der Handrechner 50 genau wie bei der Inventur-Aufnahme mit dem Handleser 60 und dem Listendrucker 70 zusammen. Der Einzelhändler geht dabei mit dem Handrechner 50, an den zu diesem Zeitpunkt nur der Handleser 60 angeschlossen ist, durch den Laden und liest von den Regalpreisschildern RPS die Waren-Codes der einzukaufenden Waren ab und gibt die Menge der jeweiligen Ware in den Handrechner ein. Daraufhin fügt er den Handrechner wieder in das System ein und schaltet mittels des Wahlschalters an der Verteileinheit 120 den Listendrucker 70 an den Handrechner 50. Dieser erstellt dann anhand der eingelesenen und eingegebenen Daten und der in ihm gespeicherten warensortimentspezifischen Warendaten eine nach Warengruppen geordnete Einkaufsliste 71 und druckt diese über den Listendrucker 70 aus. Die Sortierung nach Warengruppen hat dabei den Vorteil, dass der Einzelhändler bei seinem Einkauf beim Abholgrossmarkt systematisch und gezielt vorgehen kann, wodurch sich sein Einkaufsrundgang erheblich einfacher und zeitsparender gestaltet. Besonders zweckmässig ist dabei natürlich, wenn die Reihenfolge der Warengruppen auf der Einkaufsliste mit der körperlichen Anordnung der einzelnen Warengruppen im Abholgrossmarkt übereinstimmt. Ein typisches Beispiel einer auf diese Weise erstellten Einkaufsliste 71 ist auszugsweise in Fig. 4 dargestellt

Die Funktion Speichermedium einlesen dient dazu, auf dem Speichermedium D aufgezeichnete sortimentspezifischeWarendaten in den Handrechner bzw. dessen Speicher zu übertragen und dabei ggf. den dort vorhandenen Datenbestand zu aktualisieren. Selbstverständlich ist es auch möglich, die Warendaten nicht in den Speicher des Handrechners zu transferieren, sondern stattdessen direkt mit den auf dem Speichermedium befindlichen Warendaten zu operieren. Mit derselben Funktion kann auch der Programmcode aktualisiert werden. Der aktuelle Programmcode kann dabei im Zuge eines Einkaufsvorgangs vom Abholgrosshändler zur Yerfügung gestellt werden.

Der beim Abholgrosshändler befindliche Hauptrechner 10 ist ebenfalls für eine Reihe von unterschiedlichen Funktionen programmiert. Dazu gehören u.a. die üblichen, für die Abwicklung des normalen Verkaufsvorgangs dienenden Funktionen, welche jedoch für die vorliegende Erfindung nicht von Belang und deshalb hier nicht näher beschrieben sind. Daneben ist der Hauptrechner 10 aber noch zur automatischen Erstellung von Regalpreisschildern RPS aufgrund von Warendaten über die vom Einzelhändler eingekauften Waren und zur automatischen Aktualisierung der warensortimentspezifischen Warendaten des Einzelhändlers ausgebildet.

Die vom Einzelhändler eingekauften Waren GW werden an der Verkaufskasse des Abholgrosshändlers in der üblichen Weise mittels des optischen Hauptlesers 30 erfasst und in den Hauptrechner 10 eingelesen, welcher aus den so erfassten und den in ihm gespeicherten warensortimentspezifischen Warendaten die üblichen Einkaufsbelege erstellt und die Daten für die Kundenbuchhaltung und die Lagerbewirtschaftung bereitstellt bzw. auswertet. Gleichzeitig erstellt der Hauptrechner 10 aber auch noch aufgrund der eingelesenen Daten und der gespeicherten sortimentspezifischen Warendaten einen für den jeweiligen Einzelhändler individuellen Satz von Regalpreisschildern RPS und druckt diese über den Schilderdrucker 20 aus. Der individuelle Satz Regalpreisschilder kann sich dabei beispielsweise nur auf die gerade eingekauften Waren beschränken, er kann z.B. aber auch alle jene Waren betreffen, deren relevante Daten sich z.B. seit dem letzten Einkauf des Einzelhändlers geändert haben. Insbesondere gilt dies für Änderungen des Einzelhändler-Richtverkaufspreises. Der Einzelhändler räumt dann in seinem Laden die eingekauften Waren in die Regale ein und bringt die neuen bzw. geänderten Regalpreisschilder an. Eine manuelle Warenauszeichnung entfällt auf diese Weise vollständig.

Eine weitere wesentliche Funktion des Hauptrechners 10 besteht in der automatischen Aktualisierung des Bestands der warensortimentspezifischen Warendaten des Einzelhändlers. Dieser gibt dazu vor Beginn seines Einkaufsrundgangs sein persönliches transportables Speichermedium D an das Bedienungspersonal des Abholgrosshändlers ab. Letzteres führt das Speichermedium in den Hauptrechner 10 ein und veranlasst, dass die aktuellen Warendaten oder z.B. auch nur die geänderten Warendaten (z.B. neue Preise oder hinzugekommene oder weggefallene Artikel) oder eventuell auch ein aktualisierter Programmcode für den Handrechner auf das Speichermedium D geschrieben werden. Der Einzelhändler liest dann programmgesteuert die auf das Speichermedium D aufgezeichneten, neuen bzw. geänderten Warendaten in seinen Handrechner 50 ein und aktualisiert auf diese Weise seinen individuellen Datenbestand und ggf. auch den Programmcode.

Der Einzelhändler ist natürlich nicht an die ihm vom Abholgrosshändler auf die beschriebene Weise zur Verfügung gestellten Regalpreisschilder gebunden. Er kann, z.B. mittels eines eigenen Schilderdruckers oder des Bondruckers, selbstverständlich auch seine eigenen Regalpreisschilder anfertigen und auch die Verkaufspreise für einzelne oder alle Waren in seinem Handrechner bzw. im in diesem gespeicherten warensortimentspezifischen Datenbestand ändern. Der Handrechner 50 kann dazu mit entsprechenden Funktionserweiterungen ausgestattet sein. In diesen Fällen kann der Einzelhändler aber dann nicht mehr in vollem Umfang von den ihm vom Abholgrosshändler gebotenen Aktualisierungs-Service profitieren, sondern muss sich um die Pflege seines Datenbestands und Anpassung seiner Regalpreisschilder selber kümmern. Die semi-automatische Erstellung einer Einkaufsliste ist jedoch auch in diesen Fällen noch möglich.

Abholgrosshändler geben vielfach auch Reklamematerial mit Wareninformationen an ihre Einzelhändler ab. Darin können den Klartextinformationen über Waren auch codierte Informationen zugeordnet sein, die dann durch den Einzelhändler ebenfalls mittels des optischen Handlesers erfasst und zur Aktualisierung seines Warendatenbestands verwendet werden können. Aufgrund der so erfassten Wareninformationen kann der Einzelhändler auch einen aktualisierten Satz Regalpreisschilder beim Abholgrosshändler beziehen.

Durch das vorstehend beschriebene erfindungsgemässe Protokolliersystem können Kleinbetriebe aus Handel und Gewerbe mit minimalem Kapitaleinsatz mindestens genau so rationell arbeiten wie Grossfilialbetriebe.

## Patentansprüche

1. Protokolliersystem für die Abwicklung des Warenverkehrs eines Warenverkaufsbetriebs, insbesondere eines Einzelhändlers, mit einer modular aufgebauten Registrierkasse (RK), welche eine elektrisch steuerbare Geldkassette (90), eine Kassentastatur (100), eine optische Anzeigeeinrichtung (110) für den Kunden, einen Bon-Drucker (80) für Kassenbons und Journalstreifen, einen optischen Handleser (60) zum Einlesen von codierten Warendaten und einen die genannten Komponenten der Registrierkasse steuernden Rechner (50) aufweist, **dadurch gekennzeichnet, dass** der Rechner als transportabler Handrechner (50) ausgebildet und zusammen mit dem an ihn angeschlossenen Handleser (60) aus dem Verbund der Registrierkasse (RK) entnehmbar und als transportable autonome Einheit einsetzbar ist, wobei der Handrechner (50) zusätzlich zu den Funktionalitäten für die Steuerung der Registrierkasse mindestens noch eine Funktionalität zum Erfassen von Warenbeständen und/oder Warennachbeschaffungen aufweist, wobei über den Handleser (60) Warendaten auf Regalpreisschildern (RPS) oder anderen Warendatenträgern in den Handrechner eingelesen und zur Erstellung von Inventurdaten bzw. Warennachbeschaffungsdaten weiter verarbeitet werden.

2. System nach Anspruch 1, **dadurch gekennzeichnet, dass** der Handrechner (50) mit einem Schreib/Lesegerät (54) für ein transportables nicht-flüchtiges Speichermedium (D), vorzugsweise eine Halbleiterspeicherkarte ausgestattet ist, welches Speichermedium für die verschiedenen Funktionalitäten des Handrechners benötigte warensortimentspezifische Warendaten enthält.

3. System nach einem der vorangehenden Ansprüche, **dadurch gekennzeichnet, dass** es einen vom Handrechner (50) ansteuerbaren Listendrucker (70) aufweist und dass der Handrechner (50) mit einer Funktionalität zum Erstellen und Ausdrucken einer Wareneinkaufsliste (71) aufgrund von mittels des Handlesers (60) erfassten Warenbeständen versehen ist.

4. System nach einem der vorangehenden Ansprüche, **dadurch gekennzeichnet, dass** es einen vom Handrechner (50) ansteuerbaren Listendrucker (70) aufweist und dass der Handrechner (50) mit einer Funktionalität zum Erstellen und Ausdrucken eines Inventur-Protokolls über den Listendrucker (70) aufgrund von mittels des Handlesers (60) erfassten Warenbeständen versehen ist.

5. System nach einem der vorangehenden Ansprüche, **dadurch gekennzeichnet, dass** der Programmcode von zumindest einigen der Funktionalitäten des Handrechners (50) auf dem transportablen Speichermedium (D) enthalten ist.

6. System nach einem der vorangehenden Ansprüche, **dadurch gekennzeichnet, dass** der Handrechner (50) mit einer Funktionalität zur Aktualisierung wenigstens einiger seiner übrigen Funktionalitäten aufgrund von entsprechendem, auf dem transportablen Speichermedium (D) vorhandenem und von diesem ausgelesenem Programmcode ausgestattet ist.

7. System nach einem der vorangehenden Ansprüche, **dadurch gekennzeichnet, dass** der Handrechner (50) mit einer Basisstation (51) versehen ist, welche eine Ladeeinrichtung (52) für einen im Handrechner enthaltenen Akkumulator sowie eine bidirektionale Schnittstelle (53) aufweist, wobei der Handrechner werkzeuglos mechanisch und elektrisch lösbar mit der Basisstation verbunden ist, und dass mit Ausnahme des Handlesers (60), welcher über eine am Handrechner (50) vorgesehene Schnittstelle (55) direkt mit diesem verbunden ist, alle übrigen Komponenten (70, 80, 90, 100, 110) des Systems an eine Verteileinheit (120) angeschlossen sind, welche ihrerseits über die bidirektionale Schnittstelle (53) der Basisstation (51) mit dem Handrechner (50) in Verbindung steht.

8. System nach einem der vorangehenden Ansprüche, **dadurch gekennzeichnet, dass** der Handrechner (50) mit einer Bedienungseinheit in Form eines berührungsaktiven Bildschirms (56) ausgestattet ist.

## Claims

1. A recording system for managing the circulation of the goods of a goods sales business, in particular of a retailer, with a modular registering cash desk (RK), which is provided with an electrically controllable cash box (90), a cash register keyboard (100), an optical displaying device (110) for the client, a receipt printer (80) for cash receipts and journal tapes, an optical hand scanner (60) for reading in coded article data, and a computer (50) controlling the cited components of the registering cash desk, which comprises that the computer is in the form of a transportable hand computer (50) and, together with the hand scanner (60) connected to it, can be taken out of the compound of the registering cash desk (RK) and used as a transportable autonomous unit, the hand computer (50) having in addition to the functionalities for controlling the registering cash desk at least one other functionality for registering stocks in trade and/or for reordering goods, the article data on shelf price tickets (RPS) or on other article data carriers being read into the hand computer via the hand scanner (60) and being further processed for the creation of inventory data and of data relating to the reordering of goods.

2. A system according to claim 1, which comprises that the hand computer (50) is equipped with a write/read device (54) for a transportable non-volatile memory medium (D), preferably a semiconductor memory card, which memory medium contains merchandise assortment-specific article data required for the different functionalities of the hand computer.

3. A system according to any one of the above claims, which comprises that it is provided with a list printer (70) which can be actuated by the hand computer (50) and that the hand computer (50) is provided with a functionality for creating and printing a goods shopping list (71), based on stocks in trade registered via the hand scanner (60).

4. A system according to any one of the above claims, which comprises that it is provided with a list printer (70) which can be actuated by the hand computer (50) and that the hand computer (50) is provided with a functionality for creating and printing an inventory protocol via the list printer (70), based on the stocks in trade registered via the hand scanner (60).

5. A system according to any one of the above claims, which comprises that the programme code of at least some of the functionalities of the hand computer (50) is contained in the transportable memory medium (D).

6. A system according to any one of the above claims, which comprises that the hand computer (50) is provided with a functionality for updating at least some of its other functionalities, based on a corresponding programme code which is contained in the transportable memory medium (D) and which is read from said memory medium.

7. A system according to any one of the above claims, which comprises that the hand computer (50) is equipped with a base station (51) which has a charging equipment (52) for an accumulator contained in the hand computer and a bidirectional interface (53), the hand computer being connected to the base station in such a manner that it is mechanically and electrically detachable without any tools and that with the exception of the hand scanner (60), which is directly linked to the hand computer (50) via an interface (55) provided at the latter, all other components (70, 80, 90, 100, 110) of the system are connected to a distributing unit (120), which in turn is connected to the hand computer (50) via the bidirectional interface (53) of the base station (51).

8. A system according to any one of the above claims, which comprises that the hand computer (50) is equipped with a control unit in the form of a touch screen (56).

## Revendications

1. Système pour la détermination d'un protocole de gestion de l'acheminement de marchandises dans une surface commerciale, notamment chez un détaillant, ayant une caisse enregistreuse (RK) construite de façon modulaire qui comporte une caisse d'encaissement d'argent liquide (90) commandée électriquement, un clavier (100), un dispositif d'affichage optique (110) pour le client, une imprimante de quittance (80) pour imprimer les quittances de caisse et les rapports journaliers, un lecteur optique portable (60) pour la lecture de données codées relatives aux marchandises ainsi qu'un ordinateur (50) de gestion des composants de ladite caisse enregistreuse, **caractérisé en ce que** l'ordinateur (50) est un ordinateur portable et constitue avec le lecteur portable (60) connecté à ce demier une unité portable autonome pouvant être extraite de l'ensemble des composants de la caisse enregistreuse, dans lequel l'ordinateur portable (50) a, en complément aux fonctions de commande de la caisse enregistreuse au moins une autre fonction de saisie de données relatives aux marchandises et/ou à la commande de marchandises, et dans lequel des données relatives aux marchandises sont enregistrées dans l'ordinateur portable au moyen du lecteur portable (60) à partir d'affichettes de prix (RPS) pour les rayonnages ou d'autres supports de données relatives aux marchandises et sont utilisées pour être traitées pour élaborer un inventaire, respectivement pour effectuer la gestion des stocks.

2. Système selon la revendication 1, **caractérisé en ce que** ledit ordinateur portable (50) comporte un dispositif de lecture et d'écriture (54) pour un support de mémorisation transportable (D) de données non volatiles, de préférence sous la forme d'une carte de mémoire à semi conducteurs, ce support de mémorisation contenant les données correspondant aux assortiments de marchandises requises pour assumer les diverses fonctions de l'ordinateur portable.

3. Système selon l'une quelconque des revendications précédentes, **caractérisé en ce qu'**il comporte une imprimante de listes (70) commandée par l'ordinateur portable (50) et **en ce que** cet ordinateur portable (50) possède une fonction consistant à assurer l'élaboration et l'impression d'une liste de marchandises (71) correspondant aux données relatives aux marchandises saisies par ledit lecteur portable (60).

4. Système selon l'une quelconque des revendications précédentes, **caractérisé en ce qu'**il comporte une imprimante de listes (70) commandé par l'ordinateur portable (50) et **en ce que** cet ordinateur portable (50) possède une fonction consistant à assurer l'élaboration et l'impression d'un protocole d'inventaire au moyen de l'imprimante de listes (70) sur la base de données relatives aux marchandises saisies par ledit lecteur portable (60).

5. Système selon l'une quelconque des revendications précédentes 1, **caractérisé en ce que** le code programme d'au moins une des fonctions de l'ordinateur portable (50) est contenu dans le support de mémorisation transportable (D).

6. Système selon l'une quelconque des revendications précédentes 1, **caractérisé en ce que** l'ordinateur portable (50) comporte une fonction de mise à jour d'au moins une partie de ses autres fonctions, cette mise à jour s'effectuant sur la base de la lecture du code programme correspondant contenu dans le support de mémorisation transportable (D).

7. Système selon l'une quelconque des revendications précédentes 1, **caractérisé en ce que** l'ordinateur portable (50) est équipé d'une station de base (51) pourvue d'une installation de recharge d'un accumulateur logé dans l'ordinateur portable ainsi qu'un interface bidirectionnel (53), l'ordinateur étant connecté mécaniquement et électriquement sans recours à un outillage à la station de base, et **en ce que**, à l'exception du lecteur portable (60) qui est connecté directement à l'ordinateur portable au moyen d'un interface (55) équipant ce demier, tous les autres composants (70, 80, 90, 100, 110) du système sont couplés à un distributeur (120) qui est connecté à travers ledit interface bidirectionnel (53) de la station de base (51) à l'ordinateur portable (50).

8. Système selon l'une quelconque des revendications précédentes 1, **caractérisé en ce que** l'ordinateur portable (50) est équipé d'une unité de service se présentant sous la forme d'un écran tactile (56).
